# EUROPEAN PATENT APPLICATION

(11) **EP 0 882 913 A1**
(43) Date of publication of application: **09.12.1998**
(21) Application number: 98110029.0
(22) Date of filing: 02.06.1998
(51) Int. Cl.: F16J 15/32, F16N 19/00

(54) **System for leveling the lubricating oil of an oil-bath-lubricated mechanical component, and sealing assembly for use in such a system**

(30) Priority: 06.06.1997 IT TO970494
(71) Applicant: RFT S.p.A., 10128 Torino (IT)
(72) Inventor: Chiovato, Piero, 10025 Pino Torinese (IT)
(74) Representative: Franzolin, Luigi

(57) **Abstract**

A system for leveling the lubricating oil of an oil-bath-lubricated mechanical component, e.g. a vehicle transmission/differential assembly, having a first and a second cavity (2,3) adjacent to each other and separated by a mechanical member (4), e.g. a conical bearing (5), producing a pumping effect (8) resulting in oilflow from the second cavity (3) to the first cavity (2). The system includes a sliding-lip sealing assembly (12) for separating the two cavities in fluidtight manner and located between the second cavity and the mechanical member (conical bearing) generating the pumping effect; and an oval-slot-shaped through opening (25) formed through a supporting portion of the sealing assembly and located above a predetermined oil level in the second cavity.

## Description

The present invention relates to a system for leveling the lubricating oil of any oil-bath-lubricated mechanical component, e.g. a vehicle transmission/differential assembly, wherein two adjacent cavities are separated by a mechanical member, such as a conical bearing, producing in use a pumping effect resulting in oilflow from one cavity to the other. The invention also relates to a sealing assembly for use in such a system.

In mechanical components of the above type, the lubricating oil must be allowed to flow freely between the two adjacent cavities; otherwise, each cavity would have to be provided with an opening by which to change or top up the oil, which would be not only expensive but also substantially impossible for reasons of space.

The pumping effect of the bearings, however, results in oil accumulating in one cavity, and in little or no lubrication of the component in the other, thus resulting in premature wear and, eventually, in breakdown of the component. On the other hand, eliminating the pumping effect is unfeasible for cost and space reasons.

It is an object of the present invention to provide a system for balancing the level (and/or pressure) of the lubricating oil in two adjacent cavities of any mechanical component, and between which a pumping effect is produced in use; the system being economical, compact and highly reliable, while at the same time still enabling the oil of the entire component to be changed or topped up via a single opening.

According to the present invention, there is provided a lubricating oil leveling system for leveling the lubricating oil of an oil-bath-lubricated mechanical component, in particular a vehicle transmission/differential assembly; said mechanical component comprising a first and a second cavity adjacent to each other and separated by a mechanical member, in particular a rolling bearing, generating in use a pumping effect resulting in oilflow from the second cavity to the first cavity; characterized by comprising : a sliding-lip sealing assembly for separating said first and second cavity in fluidtight manner, and located between said second cavity and said mechanical member generating the pumping effect; and a through opening formed through a supporting portion of the sealing assembly.

More specifically, said through opening is located above a predetermined oil level in the second cavity; and, from said supporting portion carrying the opening, a sliding annular lip originates on the opposite side to a substantially rigid structure for fitment of the sealing assembly. The supporting portion may be made entirely of elastomeric material, or may comprise a portion of said structure; and, whichever the case, the sealing lip is so formed as to permit oilflow from the first cavity to the second, but not vice versa.

The oil of the mechanical component may therefore be changed or topped up using a single filler opening located at or upstream from the first cavity : after filling and consequently creating a given pressure inside the first cavity, the oil lifts the sealing lip to flow into the second cavity, and a small amount of oil may also flow through the opening. In actual use, the lip of the sealing assembly prevents the oil from being sucked back from the second cavity into the first by the pumping effect of the bearing. At the same time, however, on reaching a predetermined difference in oil pressure upstream and downstream of the sealing assembly, part of the oil is allowed to flow back towards the bearing through the opening in the sealing assembly, which acts as an "overflow" valve to prevent the oil pressure or level in the second cavity from becoming too high, or to prevent too much oil from being withdrawn from the second cavity.

The present invention therefore also relates to a sealing assembly for insertion between two cavities between which, in use, oilflow in an undesired direction may occur; the sealing assembly comprising a supporting portion from which extend, on opposite sides, a sealing lip, and a substantially rigid portion of a structure for fitment of the sealing assembly inside a seat of a mechanical component; characterized in that:
- said lip is so formed as to permit oilflow from a first said cavity to a second said cavity of said mechanical component, but not vice versa;
- said supporting portion of the sealing assembly comprises a slot-shaped through opening hydraulically connecting said cavities.

Two non-limiting embodiments of the present invention will be described by way of example with reference to the accompanying drawings, in which:
Figure 1 shows a longitudinal radial section of a mechanical component - in the example shown, a transmission/differential assembly - featuring the lubricating oil leveling system according to the invention;
Figure 2 shows a front view of a sealing assembly constituting the main element of the Figure 1 leveling system;
Figure 3 shows a larger-scale longitudinal radial section of a preferred variation of the Figure 2 sealing assembly.

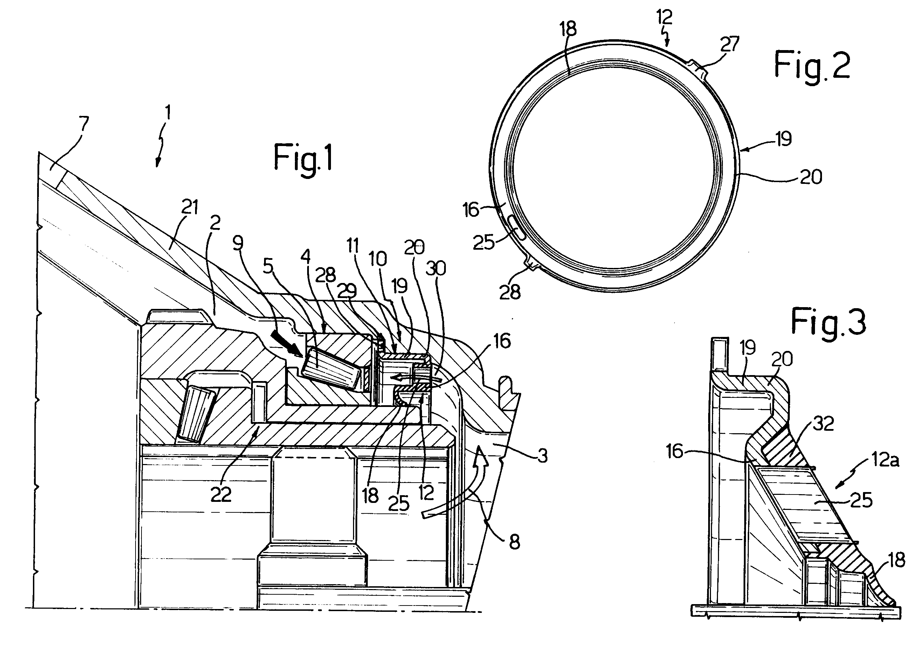

With reference to Figures 1 and 2, number 1 indicates as a whole any known type of mechanical component - in the non-limiting example shown, a vehicle transmission/differential assembly - having two adjacent cavities or chambers 2 and 3 separated by a mechanical member 4 - in the non-limiting example shown, a conical bearing 5 - generating in use a pumping effect resulting in undesired oilflow 8 - shown by the white arrow in Figure 1 - from cavity 3 to cavity 2. Component 1 is also characterized by comprising a single oil filler opening 7 (for filling/topping up the component) located at first cavity 2 or at any rate upstream from the first cavity with respect to second cavity 3, so that, to reach and also fill cavity 3, a filling/topping-up oilflow 9 - indicated by the black arrow in Figure 1 - must flow through member 4.

According to the invention, component 1 is provided, between cavities 2 and 3, with an oil leveling system, indicated as a whole by 10, for permitting free passage of oilflow 9 while at the same time, as will be seen, preventing passage of oilflow 8. In the example shown, system 10 comprises a seat 11 for fitment of a sealing assembly 12, and which is located between cavity 3 and member 4, and houses sealing assembly 12 in known manner so that sealing assembly 12 separates cavities 2 and 3 in fluidtight manner immediately downstream from member 4.

In the preferred embodiment shown in Figure 1, sealing assembly 12 is annular, and comprises a supporting portion 16 made entirely of elastomeric material, and from which extend, on opposite sides, a sliding annular sealing lip 18 also made of elastomeric material, and a substantially rigid, cylindrical portion 19 of a substantially rigid structure 20 made, for example, of sheet metal. Portion 19 is formed to permit fitment of sealing assembly 12 inside seat 11, integral with the chassis 21 of component 1, and with lip 18 contacting a movable inner member of component 1 - in the example shown, a rotary shaft 22 supported by member 4 housed inside both cavities 2, 3.

According to the invention, lip 18 is formed to permit oilflow, e.g. oilflow 9, from cavity 2 to cavity 3, but not vice versa, i.e. to act as a sliding seal on shaft 22 to prevent the passage of oilflow 8. For which purpose, lip 18 cooperates interferentially with shaft 22, and is in the form of a curved annular eye-brush inclined towards and with its concavity facing cavity 3, so as to be raised by oilflow 9 and so eliminate interference and permit substantially free passage of oilflow 9, while at the same time being pressed with greater force against shaft 22 (to increase interference) by oilflow in the opposite direction, such as oilflow 8.

Supporting portion 16 of sealing assembly 12 comprises a slot-shaped through opening 25 hydraulically connecting cavities 2 and 3. More specifically, through opening 25 is formed through supporting portion 16 so as to be located, in use, above a predetermined oil level in cavity 3 (Figure 1). In the example shown, opening 25 is substantially oval and is formed through and oriented lengthwise along the circumference of supporting portion 16.

Sealing assembly 12 also comprises a pair of diametrically opposite, outer peripheral locating tabs 27 and 28, which engage respective seats - only the upper seat, indicated 29, is shown in Figure 1 - formed on mechanical component 1 and so located as to align tabs 27, 28 of sealing assembly 12 vertically when the sealing assembly is fitted inside mechanical component 1. Slot-shaped opening 25 is located close to and offset angularly by a predetermined acute angle with respect to tab 28; tabs 27 and 28 are asymmetrical; and tab 28 close to opening 25 is the one engaging upper seat 29 in mechanical component 1.

In short, through opening 25 formed through supporting portion 16 of sealing assembly 12 defines a hydraulic passage between cavities 2 and 3.

In actual use, when changing or topping up the oil in mechanical component 1, oil is fed into cavity 2 through the single filler opening 7 upstream from cavity 2 : after filling and creating a given pressure inside cavity 2, the oil lifts sealing lip 18 - by virtue of the shape of the lip - to flow into cavity 3, and a small amount of oil may also obviously flow through opening 25.

During operation of mechanical component 1, rotation of member 4 produces a pumping effect which tends to suck oil from cavity 3 into cavity 2, i.e. to produce oilflow 8. The particular conformation, however, of sliding lip 18 of sealing assembly 12 prevents the passage of oilflow 8, which increases the pressure, and hence interference, of the lip on shaft 22. Being prevented from flowing back from cavity 3 into cavity 2, the pumping effect of member 4 causes the oil to accumulate in cavity 3. Despite the pumping effect, however, leveling system 10 provides for balancing the level (and/or pressure) of the lubricating oil inside adjacent cavities 2 and 3.

That is, on reaching a predetermined difference in oil pressure upstream and downstream of sealing assembly 12, through opening 25 in sealing assembly 12 permits an oilflow 30 from cavity 3 to cavity 2, i.e. acts as an "overflow" valve to prevent the oil pressure or level in cavity 3 from becoming too high, or to prevent too much oil from being withdrawn from cavity 3.

Figure 3, in which any details similar or identical to those already described are indicated using the same numbering system, shows a possible variation 12a of the sealing assembly constituting the main element of the leveling system according to the invention.

Unlike sealing assembly 12 in Figures 1 and 2, in which supporting portion 16 with opening 25 is made entirely of elastomeric material, supporting portion 16 of sealing assembly 12a is in the form of a substantially rigid portion of sealing assembly 12a, is substantially in the form of a truncated-cone-shaped bell, and is defined by rigid, e.g. metal, structure 20. In this case also, structure 20 is fitted, e.g. by means of a cylindrical portion 19, inside a respective seat (not shown in Figure 3) on mechanical component 1, and is located between cavities 2 and 3. Supporting portion 16 comprises an elastomeric covering 32 extending partly over structure 20, and from which a sliding annular sealing lip 18 extends on the opposite side to cylindrical portion 19. In this case, slot-shaped opening 25 is formed through rigid portion 16 and also extends through elastomeric covering 32.

## Claims

1. A lubricating oil leveling system for leveling the lubricating oil of an oil-bath-lubricated mechanical component, in particular a vehicle transmission/differential assembly; said mechanical component comprising a first and a second cavity adjacent to each other and separated by a mechanical member, in particular a rolling bearing, generating in use a pumping effect resulting in oilflow from the second cavity to the first cavity; characterized by comprising : a sliding-lip sealing assembly for separating said first and second cavity in fluidtight manner, and located between said second cavity and said mechanical member generating the pumping effect; and a through opening formed through a supporting portion of the sealing assembly.

2. A lubricating oil leveling system as claimed in Claim 1, characterized in that said through opening formed through said supporting portion of the sealing assembly is located above a predetermined oil level in the second cavity.

3. A lubricating oil leveling system as claimed in Claim 1 or 2, characterized in that said sealing assembly is annular; and in that said through opening is in the form of a substantially oval slot formed through and oriented lengthwise along the circumference of said supporting portion of said sealing assembly.

4. A lubricating oil leveling system as claimed in Claim 3, characterized in that said annular sealing assembly comprises a pair of opposite outer peripheral locating tabs, which engage respective seats formed in said mechanical component and so located as to vertically align said tabs of the sealing assembly when the sealing assembly is housed inside said mechanical component; said slot being offset angularly by a predetermined acute angle with respect to a first of said tabs.

5. A lubricating oil leveling system as claimed in Claim 4, characterized in that said tabs are asymmetrical; and in that said first tab close to said slot is the one engaging an upper seat in said mechanical component.

6. A lubricating oil leveling system as claimed in any one of the foregoing Claims, characterized in that said supporting portion having said through opening is made entirely of elastomeric material; from opposite sides of said supporting portion, there extending an annular sliding sealing lip, and a substantially rigid structure which is fitted inside a respective seat on said mechanical component, said seat being located between said first and second cavity.

7. A lubricating oil leveling system as claimed in any one of the foregoing Claims from 1 to 5, characterized in that said supporting portion having said through opening is in the form of a substantially rigid portion of said sealing assembly, is substantially in the form of a truncated-cone-shaped bell, and is defined by a structure fitted inside a respective seat on said mechanical component and located between said first and second cavity, and by an elastomeric covering of said structure, from which covering an annular sliding sealing lip extends on the opposite side to a cylindrical fitting portion of the structure.

8. A lubricating oil leveling system as claimed in Claim 6 or 7, characterized in that said annular sliding sealing lip is so formed as to permit oilflow from the first to the second cavity but not vice versa.

9. A sealing assembly for insertion between two cavities between which, in use, oilflow in an undesired direction may occur; the sealing assembly comprising a supporting portion from which extend, on opposite sides, a sealing lip, and a substantially rigid portion of a structure for fitment of the sealing assembly inside a seat of a mechanical component; characterized in that:
- said lip is so formed as to permit oilflow from a first said cavity to a second said cavity of said mechanical component, but not vice versa;
- said supporting portion of the sealing assembly comprises a slot-shaped through opening hydraulically connecting said cavities.
